# EUROPÄISCHE PATENTSCHRIFT

(11) **EP 1 022 175 B1**
(45) Veröffentlichungstag und Bekanntmachung des Hinweises auf die Patenterteilung: **21.06.2006**
(21) Anmeldenummer: 00100771.5
(22) Anmeldetag: 15.01.2000
(51) Int. Cl.: B60J 7/20

(54) **Cabriolet-Fahrzeug mit einem in einem Verdeckkasten ablegbaren Verdeck**
Cabriolet with a soft top foldable into a storage compartment
Cabriolet avec capote escamotable dans un compartiment de stockage

(30) Priorität: 22.01.1999 DE 29901054 U
(43) Veröffentlichungstag der Anmeldung: 26.07.2000
(73) Patentinhaber: Wilhelm Karmann GmbH, 49084 Osnabrück (DE); AUDI AG, 85045 Ingolstadt (DE)
(72) Erfinder: Zidorn, Siegfried, 49074 Osnabrück (DE)
(74) Vertreter: Busse & Busse Patentanwälte

(56) Entgegenhaltungen:
- EP-A- 0 958 955
- DE-A- 4 445 920
- DE-C- 19 541 168
- DE-C- 19 542 906
- DE-C- 19 636 027

## Beschreibung

Die Erfindung bezieht sich auf ein Cabriolet-Fahrzeug mit einem in einem Verdeckkasten ablegbaren Verdeck, wobei der Verdeckkasten durch eine variable Trennvorrichtung gegenüber dem Kofferraum abteilbar ist, nach dem Oberbegriff des Anspruchs 1.

Eine Einrichtung nach dem Oberbegriff des Anspruchs 1 ist aus der DE 195 42906 bekannt.

Die DE 197 23 328 A1 zeigt eine Trennvorrichtung mit einem Bodenteil 18, das mit seitlichen, jeweils in sich über Scharnierleisten 36 geteilten Wandungen 28,30 versehen ist. Zur Verlagerung des Bodenteils 18 zwischen der Gepäckaufnahme-und Verdeckaufnahmestellung muß ein Antrieb auf die Scharnierleisten 36 einwirken, um eine Senkrechtstellung bzw. ein horizontales Einfalten der seitlichen Wandungen 28,30 zu bewirken. Zudem schränken die Wandungen in eingefalteter Stellung den zur Verfügung stehenden Raum ein. Aufgrund des Einfaltens der Wandungen in den für Benutzer zugänglichen Innenraum besteht Klemmgefahr.

Der Erfindung liegt das Problem zugrunde, eine Abtrennung zwischen dem Verdeckaufnahmeraum und dem Kofferraum möglichst schmutzdicht auszuführen und gleichzeitig bei möglichst einfachem Aufbau die Hände eines Benutzers gegen Einklemmen zu schützen.

Die Erfindung löst dieses Problem mit den Merkmalen des Patentanspruchs 1. Hinsichtlich wesentlicher vorteilhafter Ausgestaltungen wird auf die Ansprüche 2 bis 15 verwiesen.

Durch die erfindungsgemäße Ausbildung des Plattenkörpers mit seitlichen Wandungen, die diesem zugeordnet und mit diesem auf und ab beweglich sind, ist sowohl in der Verdeck- als auch in der Gepäckaufnahmestellung eine seitliche Abdichtung und Spaltabdeckung zwischen dem Verdeckaufnahmeraum und dem Kofferraum gewährleistet. Besonders vorteilhaft liegen in abgesenkter Stellung des Plattenkörpers die seitlichen Wandungen an oder hinter seitlichen Verkleidungen des Kofferraums, so daß sich keine wesentliche Breiteneinschränkung ergibt. Die Wandungen sind feststehend, ein Einfalten mit der Gefahr eines Einklemmens der Hände eines Benutzers ist daher vermieden.

Besonders vorteilhaft bestehen dabei sowohl der Plattenkörper als auch die Wandungen aus Kunststoffspritzguß, so daß sie nur eine geringe Masse aufweisen. Sie können einstückig ausgebildet sein, wodurch besonders geringe Produktionskosten entstehen.

Eine horizontale Abdichtung zwischen dem Verdeckkasten und dem Kofferraum ergibt sich, wenn der Plattenkörper, der die Bodenplatte des Zusatzraums ausbildet, mehrere gegeneinander verschiebbare Plattenelemente umfaßt.

Diese können dann vorteilhaft in angehobener Stellung ineinandergeschoben sein, insbesondere dann, wenn eine schräg nach oben führende karosserieseitige Kulisse zur Führung des Plattenkörpers vorgesehen ist. In abgesenkter Stellung sind die Plattenteile auseinandergezogen, so daß die Bodenfläche vergrößert ist und die Abdichtung bis zu den Randbereichen hin reicht. Ein besonders geringer Raumbedarf ergibt sich dabei, wenn die Plattenteile teleskopisch ineinander verschieblich sind.

Weitere Vorteile und Einzelheiten ergeben sich aus einem in der Zeichnung dargestellten Ausführungsbeispiel des Gegenstandes der Erfindung.

In der Zeichnung zeigt:

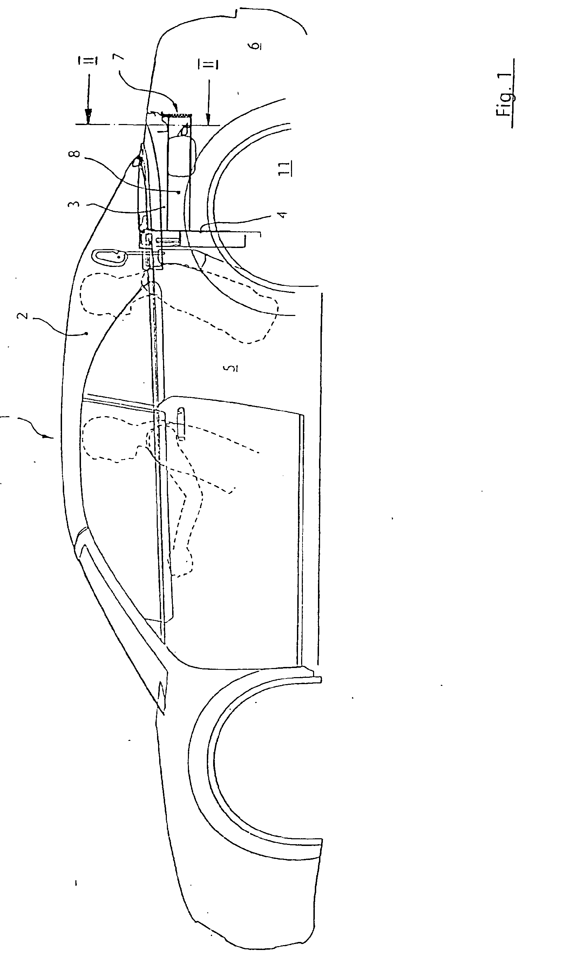

- Fig. 1: ein erfindungsgemäßes Cabriolet-Fahrzeug in schematischer, teilweise aufgeschnittener Seitenansicht,
- Fig. 2: einen Schnitt entlang der Linie II-II in Fig. 1,
- Fig. 3: eine ähnliche Ansicht wie Fig. 2 bei in Verdeckaufnahmestellung abgesenktem Plattenkörper,
- Fig. 4: einen Schnitt entlang der Linie IV-IV in Fig. 2,
- Fig. 5: einen Schnitt entlang der Linie V-V in Fig. 3,
- Fig. 6: einen Schnitt entlang der Linie VI-VI in Fig. 2,
- Fig. 7: einen Schnitt entlang der Linie VII-VII in Fig. 3.

Das erfindungsgemäße Cabriolet-Fahrzeug 1 weist ein Verdeck 2 auf, das im geöffneten Zustand in einem Verdeckkasten 3 ablegbar ist. Der Verdeckkasten 3 befindet sich im hinteren Fahrzeugbereich und ist durch eine Spritzwand 4 gegenüber dem Insassenraum 5 abgetrennt. Der Verdeckkasten 3 ist dem Kofferraum 6 des Cabriolet-Fahrzeugs 1 benachbart gelegen und gegenüber diesem über eine variable Trennvorrichtung 7 abteilbar. Diese umgrenzt zumindest bereichsweise einen Zusatzraum 8 und ist derart beweglich, daß der Zusatzraum 8 in einer Verdeckaufnahmestellung einen Teil des Verdeckkastens 3 ausbildet und diesen vergrößert und in einer Gepäckaufnahmestellung einen Teil des Kofferraums 6 ausbildet und diesen vergrößert.

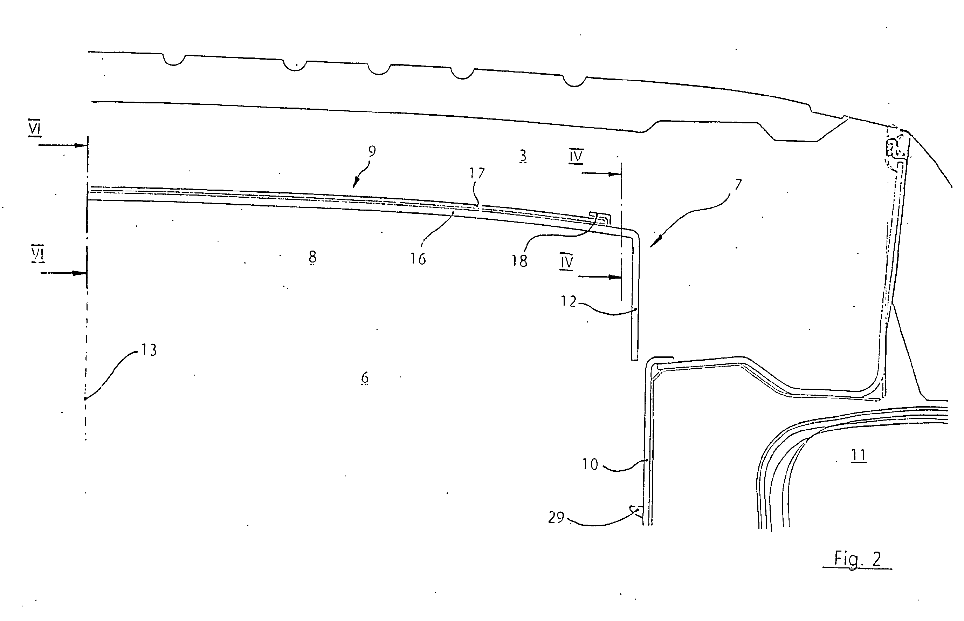

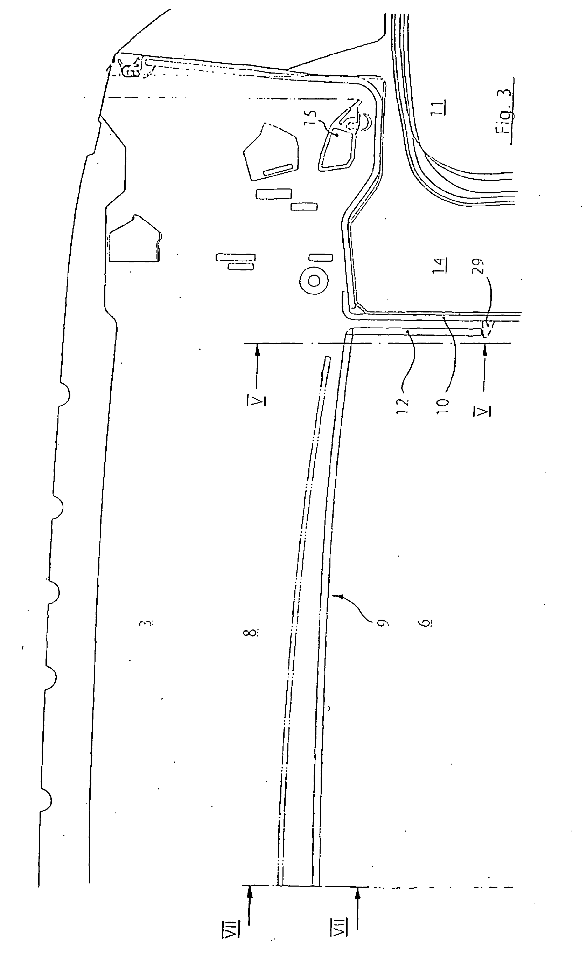

Die Trennvorrichtung 7 umfaßt einen Plattenkörper 9, der sich im wesentlichen horizontal über die lichte Breite zwischen den Verkleidungen 10 der seitlichen Radhäuser 11 erstreckt und dem seitliche, im wesentlichen vertikale Wandungen 12 zugeordnet sind, die mit dem Plattenkörper 9 auf und ab beweglich sind. Die seitlichen Wandungen 12 schließen sich randseitig an den Plattenkörper 9 an, sind symmetrisch zu einer vertikalen Fahrzeuglängsmittelebene 13 angeordnet und erstrecken sich in Fahrzeuglängsrichtung. Die seitlichen Wandungen 12 bewirken daher in Gepäckaufnahmestellung (Fig. 2) eine Abdichtung zwischen dem dann zum Kofferraum 6 gehörenden Zusatzraum 8 und dem Verdeckkasten 3 bzw. in abgesenkter Stellung (Fig. 3) eine Abdichtung zwischen dem Zusatzraum 8, der dann dem Verdeckkasten 3 zugeordnet ist, und dem Kofferraum 6.

In abgesenkter Stellung liegen die seitlichen Wandungen 12 unmittelbar an den Radhausverkleidungen 10 an oder greifen gegebenenfalls hinter diese in einen Zwischenraum 14 ein, so daß die Breite des Kofferraums nicht oder nur geringfügig verringert ist. Zur Abstützung der Trennvorrichtung 7 können an den Verkleidungen 10 Sockel 29 vorgesehen sein, die in Verdeckaufnahmestellung die seitlichen Wandungen 12 untergreifen (in Fig. 3 gestrichelt eingezeichnet).

In der Stellung gemäß Fig. 3 ist ein seitlicher Verdeckrand 15 eingezeichnet. Dieser erstreckt sich im eingelegten Zustand über die vollständige Breite des Verdeckkastens 3, wohingegen der Zusatzraum 8, der durch das auf und ab bewegliche Plattenteil 9 gebildet wird, sich nicht bis in den Randbereich hinein erstreckt.

Im Ausführungsbeispiel sind die Wandungen 12 einstückig mit dem Plattenkörper 9 verbunden, das Teil ist insgesamt aus Kunststoffspritzguß hergestellt, um die Masse gering zu halten. Auch eine mehrteilige Ausbildung von Plattenkörper 9 und seitlichen Wandungen 12 kommt in Betracht. Diese können auch aus Faserwerkstoffen, eventuell recycelten Werkstoffen hergestellt sein oder textile Bespannungen an einem Rahmen umfassen. Zumindest die Rahmen sind starr. Insgesamt haben die seitlichen Wandungen 12 daher zumindest eine starre Umrißgestalt oder sind insgesamt starr.

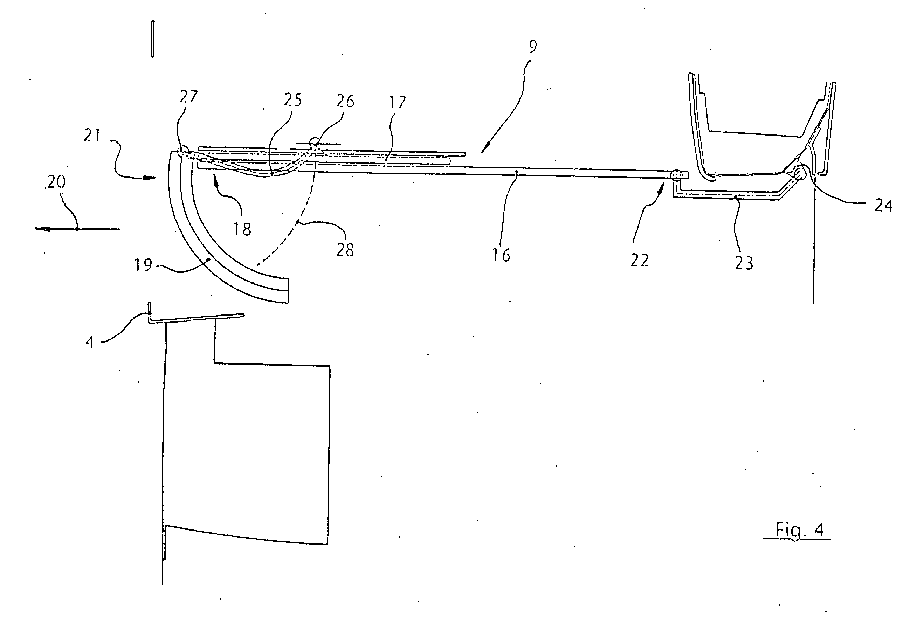

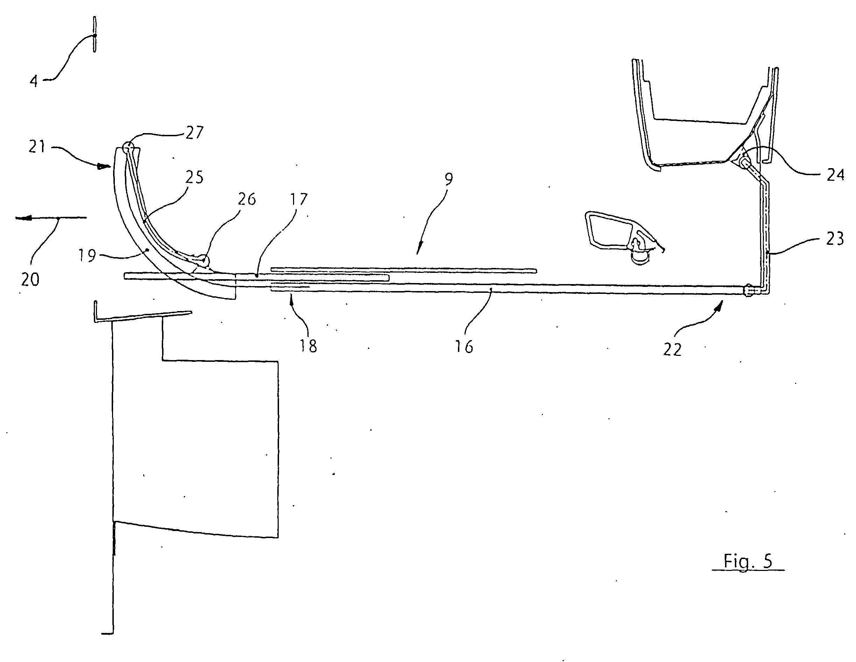

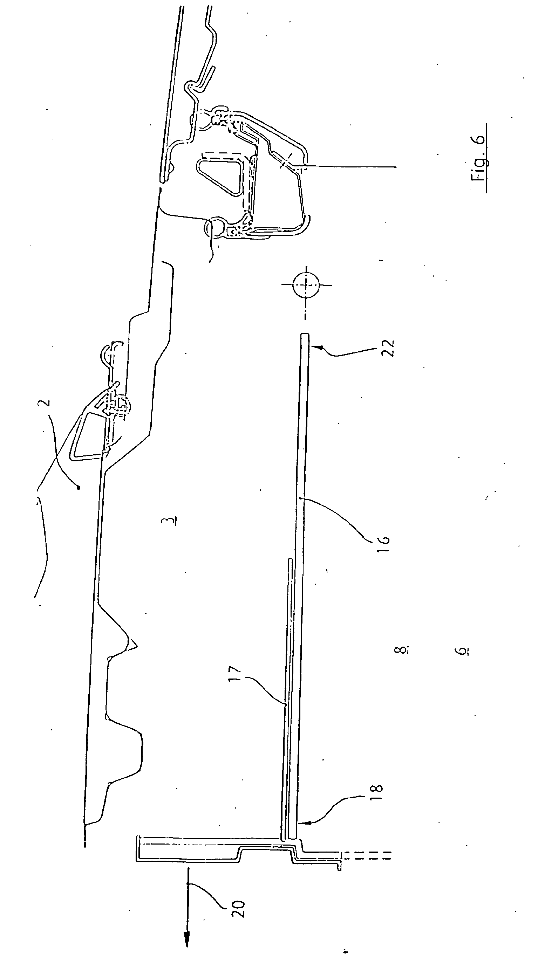

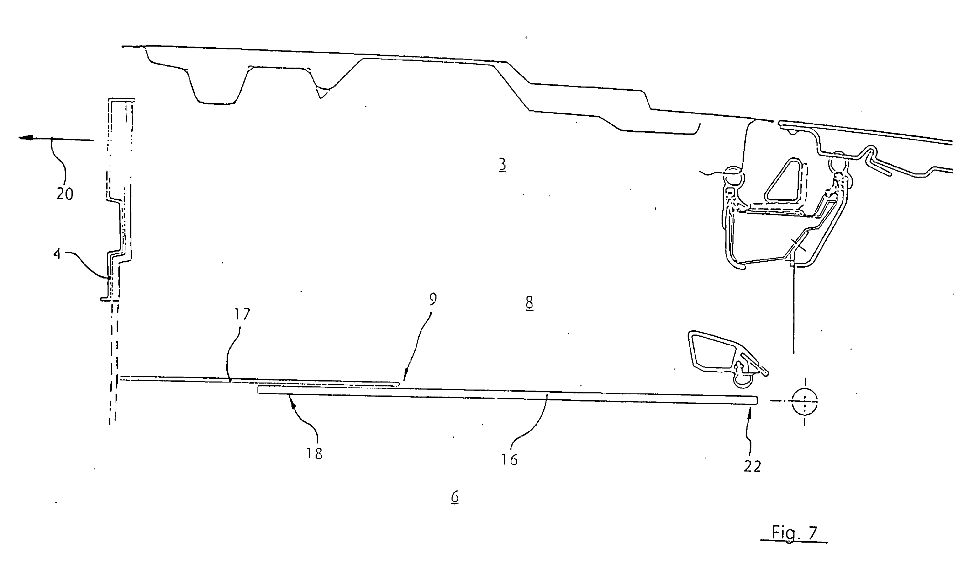

Zusätzlich oder alternativ ist der Plattenkörper 9 mehrteilig ausgebildet und umfaßt zwei gegeneinander verschiebliche Plattenteile 16 und 17, wovon das Plattenteil 16 ein Grundelement darstellt, das mit seitlichen Führungsschienen 18 zur Halterung und Führung des aufliegenden Plattenteils 17 versehen ist. Die Plattenteile 16 und 17 sind in Fahrzeuglängsrichtung gegeneinander verschieblich, wobei in Verdeckaufnahmestellung (Fig. 5 bzw. Fig. 7) der Plattenkörper 9 abgesenkt ist und die Plattenteile 16 und 17 weitestgehend gegeneinander ausgezogen sind. In Gepäckaufnahmestellung hingegen (Fig. 4 und Fig. 6) sind die Plattenteile 16,17 teleskopisch ineinandergeschoben; der Plattenkörper 9 befindet sich insgesamt in seiner horizontal höchsten Position.

Die vertikale Auf- und Abbewegung des Plattenkörpers 9 sowie das Ineinanderschieben bzw. Auseinanderziehen der Plattenteile 16 und 17 sind miteinander gekoppelt. Hierfür ist das vordere Ende 18 des Plattenteils 16 in einer Führungsbahn 19 gelagert, wodurch die Übergangsbewegung zwischen der Verdeckaufnahme- und Gepäckaufnahmestellung eine Zwangsführung erhält. Die Führungsbahn 19 ist karosserieseitig angeordnet und im wesentlichen viertelkreisförmig ausgebildet, wobei das Kreisbogensegment 19 zur Spritzwand 4 hin aufwärts verläuft und in seinem dieser benachbart gelegenen, in Fahrtrichtung 20 vorgeordneten Endbereich 21 seinen höchsten Punkt ausbildet. Die Führungsbahn 19 ist im Ausführungsbeispiel zweigeteilt und umfaßt zwei seitlich des Plattenkörpers 9 liegende Führungskulissenteile.

Im hinteren Bereich 22 des Plattenteils 16 ist dieses über seitliche Schwenkhebel 23 gehalten, die einenends schwenkbar mit dem Plattenteil 16 und anderenends über ein Gelenk 24 schwenkbar mit der Karosserie verbunden sind. Bei Führung des vorderen Endes 18 des Plattenteils 16 in der Führungskulisse 19 wird der hintere Schwenkhebel 23 mitgeführt, bzw. durch Bewegung des Schwenkhebels 23 wird das vordere Plattenende 18 in der Führungsbahn 19 aufwärts und vorwärts oder abwärts und rückwärts bewegt. Der Plattenkörper 9 verbleibt daher während der Überführung zwischen Gepäckaufnahme- und Verdeckaufnahmestellung in einer horizontalen Lage. Das gegenüber dem Plattenteil 16 verschiebliche Plattenteil 17 ist an einem weiteren Schwenkhebel 25 gehalten, der einenends mit dem Plattenteil 17 über ein Gelenk 26 verbunden ist und anderenends schwenkbar an der Karosserie im Bereich eines Gelenks bzw. einer Achse 27 festgelegt ist. Die Schwenkhebel 23 und 25 können jeweils paarweise rechts und links des Plattenkörpers 9 angeordnet sein und beispielsweise über eine dem Fahrzeugquerverlauf folgende Stange oder dergleichen miteinander verbunden sein. Während der Abwärtsverlagerung des vorderen Endes 18 des Plattenteils 16 (Übergang von Fig. 4 zu Fig. 5) wird zwangsweise das Plattenteil 17 aus dem Plattenteil 16 herausgezogen, da der Anlenkpunkt 26 des Schwenkhebels 25 an dem Plattenteil 17 bei Abwärtsverlagerung dem Schwenkradius 28 folgt und insofern in Fahrtrichtung 20 nach vorne verlagert wird. Gleichzeitig wird das hintere Plattenteil 16 über die Führungsbahn 19 und den hinteren Schwenkhebel 23 abwärts und gegen die Fahrtrichtung 20 verlagert, so daß sich mit der Abwärtsverlagerung des Plattenkörpers 9 ein Auseinanderziehen der Plattenteile 16 und 17 verbindet, umgekehrt ist mit der Aufwärtsverlagerung des Plattenkörpers 9 (Übergang von der Verdeckaufnahme- in die Gepäckaufnahmestellung) ein Ineinanderschieben der Plattenteile 16 und 17 verbunden. Die Figuren 6 und 7, die in der vertikalen Fahrzeuglängsmittelebene 13 gelegene Schnitte darstellen, wobei randseitig vorhandene Schwenkhebel zur Erleichterung der Übersichtlichkeit weggelassen wurden, verdeutlichen diese kinematische Ausbildung. Damit ist trotz Vorhandenseins der seitlichen Führungsbahnen 19, die ein Kreisbogensegment ausbilden und insofern das Plattenteil 16 nach hinten verschieben, der Zwischenraum zwischen der Spritzwand 4 und dem vorderen Ende 18 des Plattenteils 16 auch in Verdeckaufnahmestellung durch das nach vorne ausgezogene Plattenteil 17 gegenüber dem Kofferraum 6 abgedichtet.

Die Erfindung offenbart daher sowohl eine Abdichtung seitlicher Bereiche durch die vertikalen Wandungen 12 als auch eine horizontale, im vorderen Bereich der Trennvorrichtung 7 liegende Abdichtung durch das bei Abwärtsvenagerung des Plattenkörpers 9 zwangsweise ausziehbare vordere Plattenteil 17.

## Patentansprüche

1. Cabriolet-Fahrzeug (1) mit einem in einem Verdeckkasten (3) ablegbaren Verdeck (2), wobei der Verdeckkasten (3) in einem rückwärtigen Fahrzeugbereich an den Kofferraum (6) angrenzend gelegen und gegenüber diesem abteilbar ist durch eine variable Trennvorrichtung (7), die einen Zusatzraum (8) zumindest bereichsweise begrenzt und zwischen einer Verdeckaufnahmestellung, in der der Verdeckkasten um den Zusatzraum (8) vergrößert ist, und einer Gepäckaufnahmestetlung, in der der Zusatzraum (8) einen Teil des Kofferraumes (6) ausbildet, bewegbar ist, wobei die Trennvorrichtung (7) zumindest einen sich im wesentlichen horizontal erstreckenden, auf und ab beweglichen Plattenkörper (9) umfaßt, **dadurch gekennzeichnet, daß** dem Plattenkörper (9) gegenüber diesem fest stehende seitliche Wandungen (12) zugeordnet sind, die sich von dem Plattenkörper (9) im wesentlichen vertikal abwärts erstrecken, mit diesem auf und ab beweglich sind und an dessen randseitige Kantenbereiche anschließen.

2. Cabriolet-Fahrzeug nach Anspruch 1, **dadurch gekennzeichnet, daß** die seitlichen Wandungen (12) beidseits des Plattenkörpers (9) gelegen sind und sich im wesentlichen in Fahrzeuglängsrichtung erstrecken.

3. Cabriolet-Fahrzeug nach einem der Ansprüche 1 oder 2, **dadurch gekennzeichnet, daß** karosserieseitige Abstützungen für die seitlichen Wandungen vorgesehen sind, die in Gepäckaufnahmestellung eine Tragefunktion auf die Trennvorrichtung (7) ausüben.

4. Cabriolet-Fahrzeug nach einem der Ansprüche 1 bis 3, **dadurch gekennzeichnet, daß** die Wandungen (12) einstückig mit dem Plattenkörper (9) ausgebildet sind.

5. Cabriolet-Fahrzeug nach einem der Ansprüche 1 bis 4, **dadurch gekennzeichnet, daß** der Plattenkörper (9) und/oder die Wandungen aus Kunststoffspritzguß bestehen.

6. Cabriolet-Fahrzeug nach einem der Ansprüche 1 bis 5, **dadurch gekennzeichnet, daß** dem Plattenkörper zumindest eine karosserieseitige, von der Verdeckaufnahme- in die Gepäckaufnahmestellung aufwärtsverlaufende Führungsbahn zugeordnet ist, in der der Plattenkörper gehalten und in im wesentlichen horizontaler Lage zwischen der Gepäckaufnahme- und der Verdeckaufnahmestellung verfahrbar ist.

7. Cabriolet-Fahrzeug nach einem der Ansprüche 1 bis 6, **dadurch gekennzeichnet, daß** der Plattenkörper (9) mehrteilig ausgebildet ist und zumindest zwei parallel gegeneinander verschiebbare Plattenteile (16;17) umfaßt.

8. Cabriolet-Fahrzeug nach Anspruch 7, **dadurch gekennzeichnet, daß** die Plattenteile (16;17) teleskopisch ineinander einschiebbar sind.

9. Cabriolet-Fahrzeug nach einem der Ansprüche 7 oder 8, **dadurch gekennzeichnet, daß** die Plattenteile (16;17) in Fahrzeuglängsrichtung gegeneinander verschieblich sind.

10. Cabriolet-Fahrzeug nach einem der Ansprüche 7 bis 9, **dadurch gekennzeichnet, daß** in Verdeckaufnahmestellung der Plattenkörper (9) abgesenkt ist und die Plattenteile (16;17) maximal gegeneinander ausgezogen sind und in Gepäckaufnahmestellung der Plattenkörper (9) angehoben ist und die Plattenteile (16;17) ineinander geschoben sind.

11. Cabriolet-Fahrzeug nach einem der Ansprüche 7 bis 10, **dadurch gekennzeichnet, daß** die Auf- und Abbewegung des Plattenkörpers (9) und die Relativverschiebung der Plattenteile (16;17) miteinander gekoppelt sind.

12. Cabriolet-Fahrzeug nach einem der Ansprüche 7 bis 11, **dadurch gekennzeichnet, daß** dem Plattenkörper (9) zumindest eine karosserieseitige, von der Verdeckaufnahme- in die Gepäckaufnahmestellung aufwärts verlaufende Führungsbahn (19) zugeordnet ist, in der der Plattenkörper (9) gehalten und in im wesentlichen horizontaler Lage zwischen der Gepäckaufnahme- und der Verdeckaufnahmestellung verfahrbar ist.

13. Cabriolet-Fahrzeug nach Anspruch 12, **dadurch gekennzeichnet, daß** die Führungsbahn (19) ein hinteres Plattenteil (16) während der Überführungsbewegung des Plattenkörpers (9) führt und ein diesem gegenüber verschiebliches Plattenteil (17) an einem Schwenkhebel (25) gehalten ist.

14. Cabriolet-Fahrzeug nach Anspruch 13, **dadurch gekennzeichnet, daß** der Schwenkhebel (25) am oberen Ende der Führungsbahn (19) angelenkt ist und während der Abwärtsbewegung des Plattenkörpers (9) ein Auseinanderziehen der Plattenteile (16;17) bewirkt bzw. während deren Aufwärtsbewegung diese ineinanderschiebt.

15. Cabriolet-Fahrzeug nach einem der Ansprüche 7 bis 14, **dadurch gekennzeichnet, daß** am rückwärtigen Teil (22) des Plattenkörpers (9) ein weiterer Schwenkhebel (23) angeordnet ist, der im oberen Bereich (24) angelenkt ist und bei Abwärtsverschwenken eine abwärtsgerichtete Zugbewegung auf das rückwärtige Plattenteil (16) ausübt.

## Claims

1. Convertible vehicle (1) having a folding top (2) able to be stowed in a folding-top compartment (3), the folding-top compartment (3) being positioned in a rear part of the vehicle adjacent the boot (6) and being able to be divided off from this latter by a variable dividing arrangement (7), which dividing arrangement (7) bounds, at least in a region or regions, an additional space (8) and is movable between a folding-top receiving position in which the folding-top compartment is enlarged by the additional space (8) and a luggage receiving position in which the additional space (8) forms part of the boot (7), the dividing arrangement (6) comprising at least one body panel (9) which extends substantially horizontally and which is able to move up and down, **characterised in that** the body panel (9) has associated with it lateral walls (12) which are fixed in relation thereto, which extend downwards from the body panel (9) substantially vertically, which are able to move up and down therewith and which connect up with edge regions at the margins thereof.

2. Convertible vehicle according to claim 1, **characterised in that** the lateral walls (12) are positioned on both sides of the body panel (9) and extend substantially in the longitudinal direction of the vehicle.

3. Convertible vehicle according to either of claims 1 and 2, **characterised in that** there are provided, for the lateral walls, supports on the bodywork which perform a carrying function for the dividing arrangement (7) in the luggage receiving position.

4. Convertible vehicle according to one of claims 1 to 3, **characterised in that** the walls (12) are formed in one piece with the body panel (9).

5. Convertible vehicle according to one of claims 1 to 4, **characterised in that** the body panel (9) and/or the walls comprise injection-moulded plastics material.

6. Convertible vehicle according to one of claims 1 to 5, **characterised in that** the body panel (9) has associated with it at least guiding track on the bodywork which extends upwards from the folding-top receiving position to the luggage receiving position, and in which the body panel is held and can be displaced in a substantially horizontal position between the luggage receiving position and the folding-top receiving position.

7. Convertible vehicle according to one of claims 1 to 6, **characterised in that** the body panel (9) is in more than one part and comprises at least two panel parts (16, 17) which are displaceable relative to one another in parallel.

8. Convertible vehicle according to claim 7, **characterised in that** the panel parts (16, 17) are able to be inserted one into the other telescopically.

9. Convertible vehicle according to either of claims 7 and 8, **characterised in that** the panel parts (16, 17) are displaceable relative to one another in the longitudinal direction of the vehicle.

10. Convertible vehicle according to one of claims 7 to 9, **characterised in that**, in the folding-top receiving position, the body panel (9) is lowered and the panel parts (16, 17) are withdrawn one from the other to a maximum and, in the luggage receiving position, the body panel (9) is raised and the panel parts (16, 17) are inserted one into the other.

11. Convertible vehicle according to one of claims 7 to 10, **characterised in that** the up-and-down movement of the body panel (9) and the relative displacement of the panel parts (16,17) are coupled to one another.

12. Convertible vehicle according to one of claims 7 to 11, **characterised in that** the body panel (9) has associated with it at least guiding track (19) on the bodywork which extends upwards from the folding-top receiving position to the luggage receiving position, and in which the body panel (9) is held and can be displaced in a substantially horizontal position between the luggage receiving position and the folding-top receiving position.

13. Convertible vehicle according to claim 12, **characterised in that** the guiding track (19) guides a rear panel part (16) during the changeover movement of the body panel (9), and a panel part (17) which is displaceable relative to the rear panel part (16) is held on a pivoting lever (25).

14. Convertible vehicle according to claim 13, **characterised in that** the pivoting lever (25) is hinged to the upper end of the guiding track (19) and causes the panel parts (16, 17) to be withdrawn one from the other during the downward movement of the body panel (9), and inserts them one into the other during their upward movement.

15. Convertible vehicle according to one of claims 7 to 14, **characterised in that** there is arranged at the rear part (22) of the body panel (9) a further pivoting lever (23) which is hinged at the upper region (24) and which, when it pivots downwards, imparts a downwardly directed movement in traction to the rear panel part (16).

## Revendications

1. Cabriolet (1) avec une capote (2) escamotable dans un compartiment de rangement (3) adjacent au coffre (6) dans une zone de véhicule arrière et séparable de celui-ci par un dispositif de séparation variable (7) qui délimite au moins partiellement un volume supplémentaire (8) en étant mobile entre une position de réception de capote, dans laquelle le volume supplémentaire (8) est utilisé- pour agrandir le compartiment de rangement, et une position de réception de bagages, dans laquelle le volume supplémentaire (8) forme une partie du coffre (6), le dispositif de séparation (7) comprenant au moins un corps de plaque (9) essentiellement horizontal mobile vers le haut ou vers le bas,
**caractérisé en ce qu'**
on associe au corps de plaque (9) des parois latérales (12) fixes par rapport à celui-ci qui partent du corps de plaque (9) essentiellement verticalement vers le bas, déplaçables avec celui-ci vers le haut et vers le bas, et raccordées à des arêtes périphériques de celui-ci.

2. Cabriolet selon la revendication 1,
**caractérisé en ce que**
les parois latérales (12) sont sur les deux côtés du corps de plaque (9) et s'étendent essentiellement dans la direction longitudinale du véhicule.

3. Cabriolet selon l'une quelconque des revendications 1 ou 2,
**caractérisé en ce qu'**
on prévoit des appuis côté carrosserie pour les parois latérales qui, dans la position de réception de bagages, exercent une fonction de support sur le dispositif de séparation (7).

4. Cabriolet selon l'une quelconque des revendications 1 à 3,
**caractérisé en ce que**
les parois (12) font partie intégrante du corps de plaque (9).

5. Cabriolet selon l'une quelconque des revendications 1 à 4,
**caractérisé en ce que**
le corps de plaque (9) et/ou les parois sont moulés par injection de matière plastique.

6. Cabriolet selon l'une quelconque des revendications 1 à 5,
**caractérisé en ce qu'**
on associe au corps de plaque au moins un chemin de guidage côté carrosserie s'étendant vers le haut depuis la position de réception de capote dans la position de réception de bagages, guidage dans lequel le corps de plaque est maintenu et mobile dans une position essentiellement horizontale entre les positions de réception de bagages et de réception de capote.

7. Cabriolet selon l'une quelconque des revendications 1 à 6,
**caractérisé en ce que**
le corps de plaque (9) présente plusieurs parties dont au moins deux parties de plaque (16 ; 17) sont déplaçables parallèlement l'une par rapport à l'autre.

8. Cabriolet selon la revendication 7,
**caractérisé en ce que**
les parties de plaque (16 ; 17) peuvent glisser l'une dans l'autre de manière télescopique.

9. Cabriolet selon l'une quelconque des revendications 7 ou 8,
**caractérisé en ce que**
les parties de plaque (16 ; 17) se déplacent l'une par rapport à l'autre dans la direction longitudinale du véhicule.

10. Cabriolet selon l'une quelconque des revendications 7 à 9,
**caractérisé en ce que**
dans la position de réception de capote, le corps de plaque (9) est abaissé et les parties de plaque (16 ; 17) sont sorties au maximum l'une par rapport à l'autre et, dans là position de réception de bagages, le corps de plaque (9) est soulevé et les parties de plaque (16 ; 17) sont glissées l'une dans l'autre.

11. Cabriolet selon l'une quelconque des revendications 7 à 10,
**caractérisé en ce que**
le mouvement du corps de plaque (9) vers le haut et vers le bas et le mouvement relatif des parties de plaque (16 ; 17) sont couplés l'un avec l'autre.

12. Cabriolet selon l'une quelconque des revendications 7 à 11,
**caractérisé en ce qu'**
on associe au corps de plaque (9) au moins un chemin de guidage (19) côté carrosserie s'étendant vers le haut depuis la position de réception de capote dans la position de réception de bagages, guidage dans lequel le corps de plaque (9) est maintenu et mobile dans une position essentiellement horizontale entre les positions de réception de bagages et de réception de capote.

13. Cabriolet selon la revendication 12,
**caractérisé en ce que**
le chemin de guidage (19) guide une partie de plaque arrière (16) pendant le mouvement du corps de plaque (9) de transfert, et une partie de plaque (17) mobile par rapport à celui-ci est maintenue sur un levier pivotant (25).

14. Cabriolet selon la revendication 13,
**caractérisé en ce que**
le levier pivotant (25) est articulé à l'extrémité supérieure du chemin de guidage (19) et provoque un étirage des parties de plaque (16 ; 17) lors du mouvement du corps de plaque (9) vers le bas, ou les fait glisser l'une dans l'autre lors de leur mouvement vers le haut.

15. Cabriolet selon l'une quelconque des revendications 7 à 14,
**caractérisé en ce qu'**
on dispose sur la partie arrière (22) du corps de plaque (9) un autre levier pivotant (23) particulé dans la zone supérieure (24) et qui exerce un mouvement de traction vers le bas sur la partie de plaque arrière (16) lors d'un pivotement vers le bas.
